# EUROPEAN PATENT APPLICATION

(11) **EP 1 291 221 A1**
(43) Date of publication of application: **12.03.2003**
(21) Application number: 01830570.6
(22) Date of filing: 07.09.2001
(51) Int. Cl.: B60K 15/03, F17C 13/04, F17C 13/06

(54) **Toroidal tank for LPG**

(71) Applicant: Fratelli Ghezzi S.r.l., 24048 Curnasco di Treviolo (Bergamo) (IT)
(72) Inventor: Ghezzi, Venanzio, 24048 Curnasco di Treviolo (Bergamo) (IT); Ghezzi, Alfredo, 24048 Curnasco di Treviolo (Bergamo) (IT); Ghezzi, Paolino, 24048 Curnasco di Treviolo (Bergamo) (IT); Ghezzi, Guerino, 24048 Curnasco di Treviolo (Bergamo) (IT)
(74) Representative: Long, Giorgio

(57) **Abstract**

The present invention relates to a toroidal tank for LPG (liquefied petroleum gas) of the type used in motor vehicles, provided with a system for isolating the valve unit from the external environment.

More particularly, the present invention relates to a tank (1) for LPG, comprising a hollow body (2) and an aperture (3) which puts the inside of the tank in communication with the outside, the said aperture (3) being associated with a collar (4) designed to be engaged with a valve unit (5), characterized in that the said collar (4) is associated with a containing casing (7) of the valve unit (5).

## Description

The present invention relates to a toroidal tank for LPG (liquefied petroleum gas) of the type used in motor vehicles, provided with a system for isolating the valve unit from the external environment.

Toroidal tanks for LPG are already known. For example, GB 2,095,808 in the name of Kosan Cylindric A/S describes a toroidal tank in which the tank filling aperture is located on the outer circumference of the toroid. These tanks are generally housed in the spare wheel well of the vehicle, thus limiting the space occupied by the tank and leaving most of the space in the boot free. To optimize the space occupied even further, toroidal tanks have been produced in which the filling aperture, to which the valve unit and the pressure gauge are attached, is positioned in the inner circumference of the toroid, and thus faces into the central hole.

To prevent contamination of luggage, and, consequently, of the passenger compartment of the vehicle by accidental leaks of LPG, it is important that the space in which the valve unit is housed should be suitably isolated from its environment. Patent EP 0,610,416 held by I.CO.M s.r.l. tackles this technical problem and resolves it by enclosing the central space of the toroid, into which the filling aperture with the valve unit opens, between a lower plate and an upper plate held together by a screw and nut system which passes through the central void to connect them. Although this system for isolating the valve unit resolves the problem described above, it does not permit easy and rapid access to the valve unit where this is necessary, since the tank has to be removed from its housing to allow access to the lower plate and thus to the lower ends of the screws for disassembling the two plates.

The problem to which the present invention relates is therefore that of providing a toroidal tank for LPG in which the valve unit is isolated from the external environment but is still easily and rapidly accessible.

This problem is resolved with a toroidal tank for LPG as specified in the attached claims.

Further characteristics and advantages of the toroidal tank for LPG according to the present invention will be made clearer by the description of two examples of embodiment, provided below for guidance and without restrictive intent, with reference to the following figures:
Figure 1 shows a sectional side view of the toroidal tank for LPG according to the present invention;
Figure 2 shows a side view of the containing casing of the valve unit according to the present invention, in a half-open condition;
Figure 3A shows a plan view from above of the base of the containing casing of Figure 2;
Figure 3B shows a side view of the base, viewed in the direction A of Figure 3A;
Figure 3C shows a side view of the base, viewed in the direction B of Figure 3A;
Figure 4A shows a plan view from above of the cover of the containing casing of Figure 2;
Figure 4B shows a view of the cover, viewed in the direction A of Figure 4A;
Figure 4C shows a view of the cover, viewed in the direction B of Figure 4A;
Figure 5 shows a side view of the detail of the mechanism for locking the containing casing of Figure 2;
Figure 6 shows a perspective view of a second embodiment of the mechanism for locking the containing casing according to the invention.

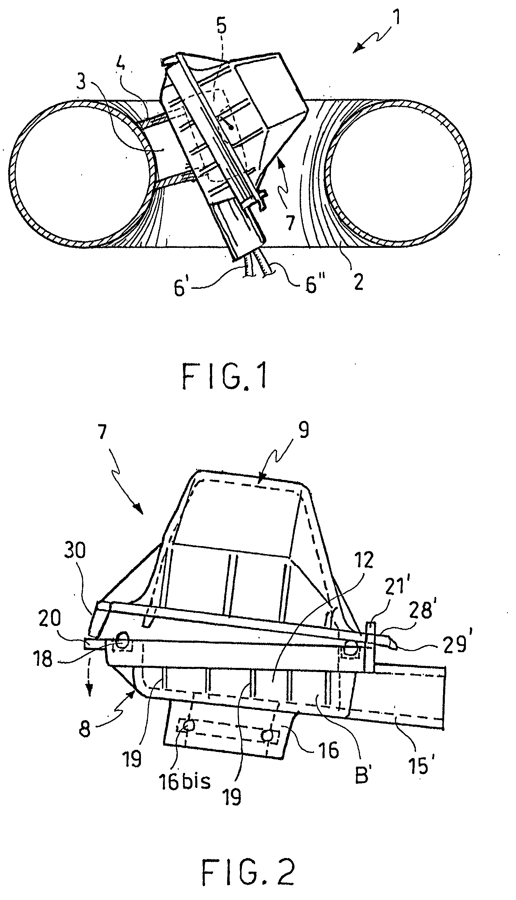

With reference to the figures, the toroidal tank for LPG, indicated as a whole by the number 1, comprises a hollow body 2, which is shown in section in Figure 2, in which is made an aperture 3 through which the interior of the tank communicates with the exterior. The aperture 3 is located on the upper part of the surface facing the central hole of the toroid, in such a way that, when the tank is housed in the spare wheel well of a vehicle, the aperture 3 faces obliquely upwards. This aperture 3 is associated with a collar 4, threaded externally at its outer end, to which is fixed the valve unit 5. The valve unit 5 is connected to an LPG filling line 6' and a vent line 6".

The fixing collar 4 of the valve unit 5 is associated with a containing casing 7, which, as shown in Figure 1, encloses the valve unit, thus isolating it from its environment.

The containing casing 7 comprises a base 8 and a cover 9.

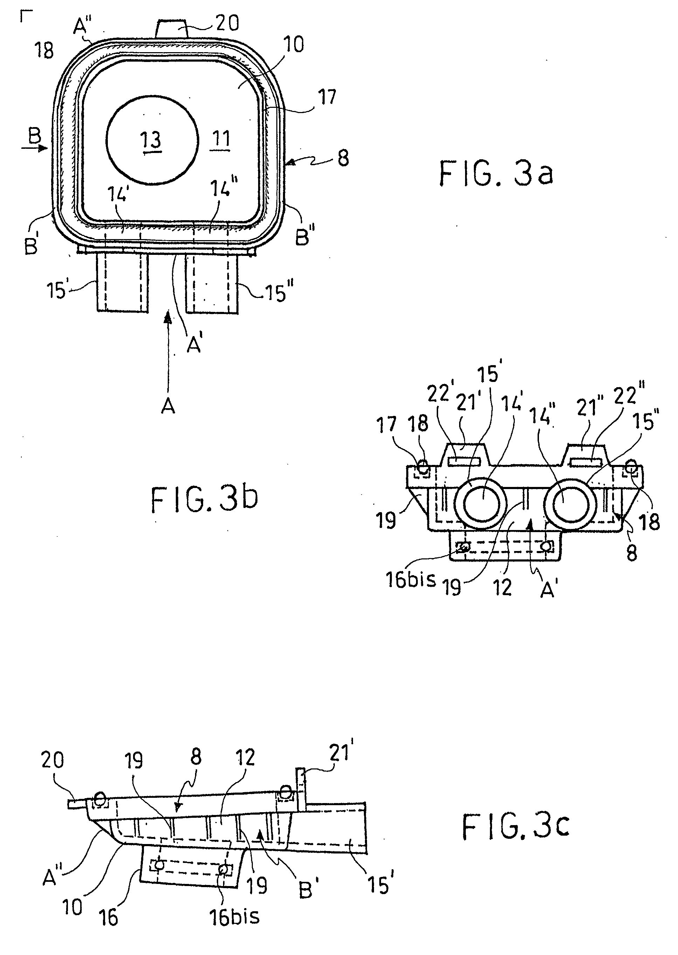

With reference to Figures 3A, 3B and 3C, the base 8 comprises a body 10 having an essentially rectangular or square bottom 11 and corresponding walls 12 rising from the bottom without a continuity solution. However, these walls 12 are higher on one side A' of the bottom 11 than on the opposite side A", and are therefore connected, on the remaining sides B' and B", by essentially wedge-shaped walls (Figure 3C).

On the side A', the wall 12 has two essentially circular apertures 14' and 14" which are associated externally with corresponding sleeves 15' and 15" designed to hold the said filling and vent lines 6' and 6". The upper edges of the walls 12 terminate in an outwardly projecting seat 17 which is developed along the whole perimeter of the edge and which is designed to house a seal 18, for example a rubber 0-ring. A set of reinforcing ribs 19 connects the outer surface of the walls 12 to the undercut of the outwardly projecting seat 17.

A circular aperture 13 is made in the bottom 11 of the base 8 and is associated with a sleeve 16 whose internal diameter is such that it engages in a sealed way with the outer unthreaded surface of the collar 4. A seal 16bis is fitted in a suitable seat on the inner surface of the sleeve 16, to provide the requisite tightness.

Because of the difference between the heights of the walls 12 on the sides A' and A" of the body 10, the axis passing through the centre of the circular aperture 13 is inclined with respect to the direction orthogonal to the plane on which the upper edge of the base 8 lies. This configuration provides at least a partial compensation for the inclination of the axis of the collar 4, and is such that, when the containing casing 7 is mounted on the collar 4, the valve unit and the pressure gauge associated with it are suitably visible from above through the upper surface of the cover 9.

A tooth 20 essentially shaped in the form of a flattened trapezoid projects outwards from the outer surface of the side A" of the body 10 in the proximity of the upper edge. Two tabs 21' and 21" placed side by side extend upwards on the upper edge of the opposite side A'. These tabs 21' and 21" are provided with slots 22' and 22".

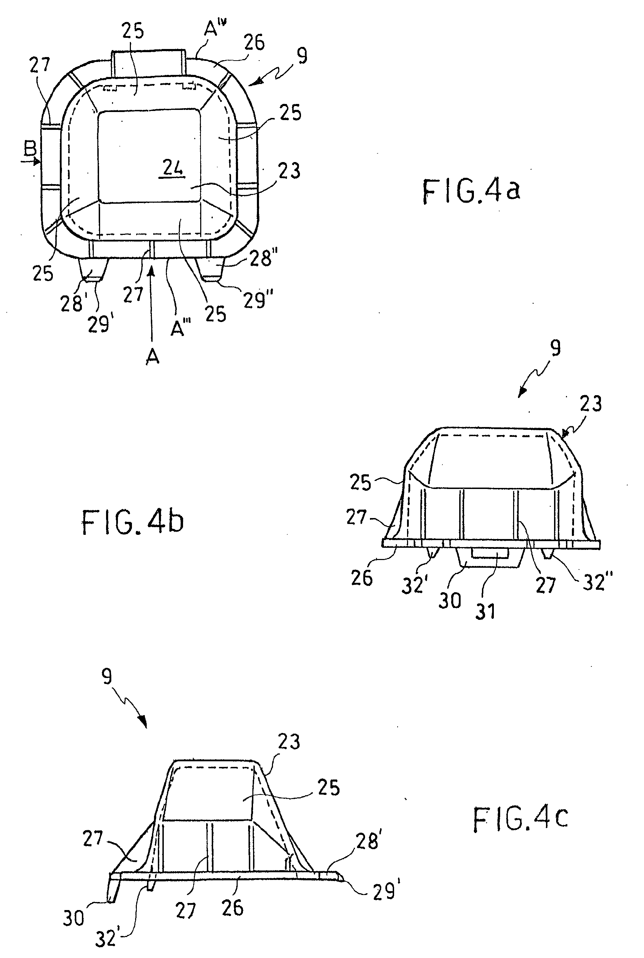

The cover 9 (Figures 4A, 4B and 4C) comprises a shell 23 having an essentially flat upper surface 24 and surfaces 25 connecting it to the lower outwardly projecting edge 26. The lower edge 26 has a shape and dimensions such that it contacts the seal 18 within the seat 17 of the base 8 when the containing casing 7 is assembled. A set of ribs 27 extends between the said connecting surfaces 25 and the lower edge 26.

Two teeth 28' and 28", terminating in downwardly inclined ends 29' and 29", extend outwards and in the plane in which the lower edge 26 lies, on the side A' ' ' of the lower edge 26 of the shell 23, which as stated is designed to contact the corresponding side A' of the base 8. These teeth are positioned in such a way and have such shapes and dimensions that they engage with the slots 22' and 22" of the tabs 21' and 21" of the base.

A tab 30, having a slot 31 having a shape and dimensions such that it engages with the tooth 20 of the base 8, projects outwards and downwards from the opposite side A'''' of the edge 26. A pair of small teeth 32' and 32" are also positioned on the lower edge 26, but farther towards the inside than the tooth 30. Thus, when the cover 9 is fitted on the base 8, these small teeth 32' and 32'' are positioned inside the edge of the base and act as a means of retaining the cover on the base, since they prevent the cover and base from sliding with respect to each other.

The base 8 of the containing casing 7 can be made from metal or plastic material, the latter being preferred because of its characteristics of lightness and low cost. The cover 9 can also be made partially or wholly from plastic material and comprises at least one upper portion (for example the upper surface 24) of transparent material, in such a way as to permit visual inspection of the valve unit 5.

The process of fitting the containing casing 7 on to the tank 1 will now be described, again with reference to the figures.

The base 8 of the containing casing is initially mounted on the collar 4 by means of the sleeve 16 which, because of the seal 16bis located inside it, ensures both the structural stability of the assembly and the complete prevention of any leaks of LPG. The valve unit 5 is then screwed on to the collar 4, the LPG filling and vent tubes 6' and 6" being passed through the apertures 14' and 14" of the base 8. Since the diameters of these apertures are essentially equal to the diameters of the tubes 6' and 6", leaks are prevented in this case also because of the corresponding sleeves 15' and 15".

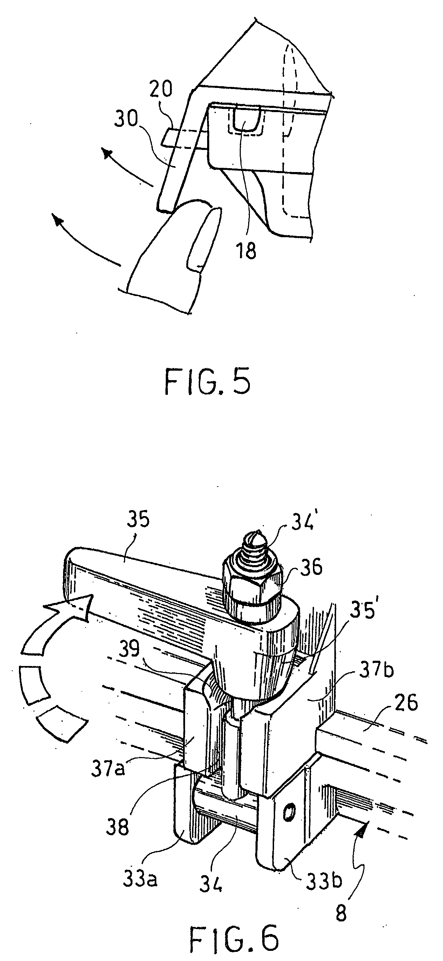

At this point, the cover 9 is mounted on its base 8, by inserting the teeth 28' and 28" of the cover into the slots 22' and 22" of the tabs 21' and 21" of the base and then lowering the opposite edge of the casing 9 until its lower edge 26 interacts with the seal 18 located in the seat 17 of the base 8. At this point, the small teeth 32' and 32" can react against the inner wall of the base, prevent the teeth 29' and 29" from moving out of the slots 22' and 22", which would cause the casing 7 to come apart. When the cover 9 is lowered on to the base 8, the slot 31 of the tab 30 of the cover is engaged by a snap fitting with the tooth 20 of the base 8, thus providing means of locking the cover to the base. If necessary, the cover can be removed simply by using a finger (as shown in Figure 5) to disengage the tab 30 from the tooth 20, imparting a degree of pressure to the cover if necessary in order to overcome the counter-pressure exerted by the seal on the edge of the cover.

In a further embodiment shown in Figure 6, the base 8 has two parallel tabs 33a and 33b instead of the tooth 20, between which tabs is pivoted a T-shaped element 34 which terminates at the free end of its shank in a threaded portion 34' on which a lever 35 is rotatably fitted. The lever 35 has an essentially conical base 35', in which is made the hole, which engages with the shank of the T-shaped element 34. A nut 36 secures the lever 35 to the shank of the T-shaped element 34. On the edge 26 of the cover 9, in place of the tab 30 with the slot 31 of the embodiment described previously, there is a pair of parallel tabs 37a and 37b corresponding to the tabs 33a and 33b of the base 8. A cylindrical seat 38 for the shank of the T-shaped element 34 is formed between the two tabs 37a and 37b of the cover. The top of this seat 38 terminates in a funnel-shaped portion 39.

The means of locking the cover to the base as described in this second embodiment operate in the following way. When the cover 9 has been lowered on to the base 8, the two pairs of tabs 33a, 33b and 37a, 37b come into contact with each other. At this point, the T-shaped element 34 is swung from a lowered position (not shown) to the raised position of Figure 6, in which the shank of the T-shaped element is inserted into the seat between the two tabs 37a and 37b. The lever 35 is then rotated in the direction indicated by the arrow in the figure, thus locking the cover. This lock is made more stable by the counter-pressure exerted by the seal 18, which tends to push the base 8 away from the cover 9, thus making the essentially conical base 35' of the lever 35 react against the upper funnel-shaped portion 39 of the seat 38 of the T-shaped element 34.

The advantages of the toroidal tank according to the present invention will be apparent from the above description.

For example, the system of isolation of the valve unit 5 according to the present invention is particularly simple to use, since it enables the containing casing 7 to be assembled with a small number of operations and enables the cover to be removed by a simple operation which can be carried out with one hand if necessary, owing to the absence of the more complicated nut and bolt systems used in the prior art. Furthermore, there is no need to remove the tank from its seat, since the cover can be removed from above and there are no penetrating screws and corresponding nuts.

Also, the containing casing 7 can be made easily and cheaply, especially in the first embodiment shown in Figure 2, since it can be made in two single pieces.

The shape and dimensions of the containing casing 7 are such that they match the limited dimensions of the central space of the ring of the tank. In particular, the shell shape of the cover 9, together with the fact that this cover can be made from transparent material, permits full visual inspection of the valve unit inside it.

Clearly, only certain particular embodiments of the toroidal tank and the containing casing of the valve unit to which the present invention relates have been described here, but a person skilled in the art will be able to make any necessary modifications to the invention to adapt it to particular applications, without departing from the scope of protection of the present invention.

For example, it is possible to replace the system of hinging the cover 9 on the base 8 with a conventional system in which the two parts can swing around a pivot. In this case, however, the complete removal of the cover from the base will be more difficult.

The shell 23 of the cover 9 can be made in any shape which permits satisfactory visual inspection of the inside of the casing, for example a hemispherical or semi-ovoid shape.

The means of hinging the cover 9 on the base 8, comprising the tabs 21' and 21" with the slots 22' and 22" on the base and, correspondingly, the teeth 28' and 28" on the cover, can also be modified so that they comprise a single tab and a single tooth, or more than two tabs and two teeth.

The means of locking the cover 9 to the base 8, comprising the tooth 20 located on the base and the corresponding tab 30 provided with a slot 31 located on the cover, can also be modified so that there is more than one tooth.

Clearly, also, the containing casing of the valve unit according to the present invention can also be applied to the collars of cylindrical tanks for LPG, without any loss of functionality and advantages.

## Claims

1. Tank (1) for LPG, comprising a hollow body (2) and an aperture (3) which puts the inside of the tank in communication with the outside, the said aperture (3) being associated with a collar (4) designed to be engaged with a valve unit (5), **characterized in that** the said collar (4) is associated with a containing casing (7) of the valve unit (5).

2. Tank according to Claim 1, the said tank being of toroidal shape and the said collar (4) with the said containing casing (7) of the valve unit (5) projecting into the central void of the tank.

3. Tank according to Claim 1 or 2, in which the said containing casing (7) comprises a base (8) and a cover (9), an aperture (13) being formed in the bottom (11) of the said base (8) and being associated with a sleeve (16) designed to be inserted into the said collar (4) for fixing the containing casing (7) to the collar (4).

4. Tank according to Claim 3, in which a seal (16bis) is positioned inside the said sleeve (16) for fixing the containing casing (7) in a sealed way to the collar (4).

5. Tank according to any one of Claims 3 or 4, in which the said sleeve (16) projects outside the said containing casing (7).

6. Tank according to any one of Claims 3 to 5, in which walls (12) rise from the said bottom (11) of the said base (8) without a continuity solution, the upper edge of the said walls (12) comprising a seat (17) for housing a seal (18).

7. Tank according to Claim 6, in which the said walls (12) extend to a greater height on one side (A') of the bottom (11) than on the opposite side (A"), and are connected, on the remaining sides (B' and B") by essentially wedge-shaped walls.

8. Tank according to any one of Claims 3 to 7, in which the said base (8) and the said cover (9) comprise a set of reinforcing ribs (19 and 27).

9. Tank according to any one of Claims 3 to 8, in which the wall (12) on the said side (A') has two apertures (14' and 14") which is externally associated with corresponding sleeves (15' and 15") designed to house tubes (6' and 6") for filling with LPG and for venting.

10. Tank according to any one of Claims 3 to 9, the said base (8) and the said cover (9) of the containing casing (7) being associated with means of hinging and means of locking the cover to the base.

11. Tank according to Claim 10, in which the said means of hinging the cover (9) to the base (8) comprise one or more tabs (21' and 21") provided with slots (22' and 22"), extending upwards on the upper edge of the said side (A') of the base (8), and correspondingly one or more teeth (28' and 28") extending outside the lower edge (26) of the cover (9), the said one or more teeth being designed to engage with the slots (22' and 22") of the said one or more tabs (21' and 21") of the base.

12. Tank according to Claim 10 or 11, in which the said means of locking the cover (9) to the base (8) comprise at least one tooth (20) projecting from the outer surface of the side (A") of the base (8) in the proximity of the upper edge and correspondingly at least one tab (30) provided with a slot (31), projecting downwards from the edge (26) of the cover (9), the said tab (30) being designed to engage with the tooth (20) of the base (8).

13. Tank according to Claim 10 or 11, in which the said means of locking the cover (9) to the base (8) comprise two parallel tabs (33a and 33b) located on the said base (8), on which is hinged a T-shaped element (34) the free end of whose shank terminates in a threaded portion (34') on which a lever (35) is rotatably fitted, the said lever (35) having an essentially conical base (35') in which is made the hole in which the shank of the T-shaped element (34) is engaged, a pair of parallel tabs (37a and 37b), corresponding to the tabs (33a and 33b) of the base (8), being positioned on the edge (26) of the cover (9), a cylindrical seat (38) being formed between the two tabs (37a and 37b) for the shank of the T-shaped element (34), the top of this seat (38) terminating in a funnel-shaped portion (39).

14. Tank according to any one of Claims 3 to 13, in which the said containing casing (7) comprises means of securing the cover (9) to the base (8).

15. Tank according to Claim 14, in which the said securing means comprise a pair of small teeth (32' and 32") extending downwards from the lower edge (26) of the cover (9), internally with respect to the said teeth (30), the said small teeth (32' and 32") being designed to interact with the inner edge of the base (8), thus preventing the cover and base from sliding with respect to each other.

16. Tank according to any one of Claims 1 to 15, in which the said containing casing (7) is made from plastic material and the said cover (9) comprises at least one upper portion made from transparent material.

17. Containing casing (7) of the valve unit of a tank (1) for LPG, as described in any one of Claims 3 to 16.
